# EUROPÄISCHE PATENTSCHRIFT

(11) **EP 2 603 944 B1**
(45) Veröffentlichungstag und Bekanntmachung des Hinweises auf die Patenterteilung: **03.07.2019**
(21) Anmeldenummer: 10749599.6
(22) Anmeldetag: 11.08.2010
(51) Int. Cl.: H01M 2/16, H01M 10/052

(54) **SEPARATOR MIT ERHÖHTER DURCHSTOSSFESTIGKEIT**
SEPARATOR WITH INCREASED PUNCTURE RESISTANCE
SÉPARATEUR À RÉSISTANCE À LA PERFORATION ÉLEVÉE

(43) Veröffentlichungstag der Anmeldung: 19.06.2013
(73) Patentinhaber: Carl Freudenberg KG, 69469 Weinheim (DE)
(72) Erfinder: ROTH, Michael, 55131 Mainz (DE); WEBER, Christoph, 69514 Laudenbach (DE); BERG, Margitta, 69488 Birkenau (DE); GEIGER, Sigrid, 69488 Birkenau (DE); HIRN, Klaus, 69493 Hirschberg (DE); WASCHINSKI, Christian, 69115 Heidelberg (DE); VILLING-FALUSI, Sandra, 68542 Heddesheim (DE); KASAI, Maxim, 67061 Ludwigshafen (DE)
(86) Internationale Anmeldenummer: PCT/EP2010/004912
(87) Internationale Veröffentlichungsnummer: WO 2012/019626

(56) Entgegenhaltungen:
- EP-A2- 0 383 161
- EP-A2- 0 967 670
- WO-A1-00/36672
- WO-A1-2009/033627
- WO-A1-2010/008003
- US-A- 3 847 676
- US-A1- 2002 182 511
- US-A1- 2007 264 577
- US-A1- 2011 311 856

## Beschreibung

### Technisches Gebiet

Die Erfindung betrifft einen Separator gemäß dem Oberbegriff des Patentanspruchs 1.

### Stand der Technik

Separatoren der genannten Art sind bereits aus der WO 2009/033627 A1 bekannt. Diese Separatoren sind mit Füllstoffpartikeln beschichtet und können in Li-Ionen-Zellen oder Kondensatoren verwendet werden.

Ein Ausfall von Li-Ionen-Zellen kann externe oder interne Ursachen haben. Als externe Ursachen können ein fehlerhaftes Batteriemanagementsystem oder eine ausfallende Temperaturkontrolle in Frage kommen. Interne Ausfälle können durch die Zellchemie, Degradationsvorgänge oder interne Kurzschlüsse bedingt sein.

Auf die externen Ursachen kann man durch eine Ausgestaltung der Zelle nur bedingt Einfluss nehmen. Die internen Ursachen sollten jedoch verringert bzw. eliminiert werden, um den langfristigen Einsatz von hochkapazitiven Li-Ionen-Zellen zu ermöglichen.

Etwa 90% aller Zellausfälle in Li-Ionen-Batterien sind bedingt durch interne Kurzschlüsse. Ein interner Kurzschluss tritt auf, wenn sich ein oder mehrere Elektrodenkörner im Betrieb einer Batterie durch den Separator drücken und einen elektrisch leitfähigen Pfad bilden, der zu einem Kurzschluss führt.

Bei einem Kurzschluss kommt es durch die spontane Entladung der Zelle zu einer sehr starken lokalen Wärmeentwicklung, die viele Separatoren schrumpfen bzw. aufschmelzen lässt. Im besten Fall führt dies "nur" zu einem Ausfall, im schlimmsten Fall zu einer Explosion bzw. Entzündung der Zelle. Je größer die Zellen sind, desto problematischer sind die zuvor genannten Vorgänge, da die gespeicherte Energie in der Zelle mit deren Kapazität korreliert.

Gängige poröse Separatoren auf der Basis von Polyolefinmembranen, aber auch keramische Separatoren, haben gute elektrische Eigenschaften, die sich in der gesteigerten Energiedichte bzw. Leistungsdichte von Li-Ionen-Zellen in den letzten 15 Jahren gezeigt haben.

Nachteilig bei diesen Separatoren sind aber deren thermische und mechanische Eigenschaften. So zeigen beispielsweise Polypropylen und Polyethylen einen niedrigen Schmelzpunkt und poröse Membranen aus diesen Werkstoffen einen hohen Schrumpf und daher eine eingeschränkte mechanische Stabilität.

Weitere Schwachpunkte sind insbesondere die niedrige Durchstoßfestigkeit und Weiterreißfestigkeit von Polyolefinmembranen sowie von keramischen Separatoren. Diese Schwachpunkte führen immer wieder zu teils dramatischen Zellausfällen.

Leider beeinflussen die mechanischen Eigenschaften der Separatoren neben der Sicherheit von elektrochemischen Zellen auch deren elektrische Eigenschaften. Sobald die mechanischen Eigenschaften eines Separators verbessert werden, um beispielsweise dessen Durchstoßfestigkeit zu erhöhen, muss bei gleichem Aufbau ein dichterer Separator verwendet werden. Damit geht allerdings eine verringerte Porosität und somit ein erhöhter elektrischer Widerstand in der Zelle einher, da der Elektrolyt schlechter durch die Membran diffundieren kann.

US 2011/311856 beschreibt einen Separator für eine Energiespeichervorrichtung umfassend einen porösen Film auf Polyolefinbasis, der auf mindestens einer Seite mit einer Partikel enthaltenden Schicht laminiert ist, die Harz auf Cellulosebasis, anorganische Partikel und thermoplastische Harzpartikeln mit einem Schmelzpunkt von 100-140 ° C enthält. Die thermoplastischen Harzpartikeln sollen dem Separator einen Shut Down-Mechanismus verleihen.

### Darstellung der Erfindung

Der Erfindung liegt daher die Aufgabe zu Grunde, einen Separator der eingangs genannten Art derart auszugestalten und weiterzubilden, dass dieser bei einer erhöhten mechanischen Stabilität eine hohe Permeabilität zeigt.

Die vorliegende Erfindung löst die zuvor genannte Aufgabe durch die Merkmale des Patentanspruchs 1.

Die verwendeten Cellulosederivate weisen erfindungsgemäß eine Kettenlänge von mindestens 100 Wiederholungseinheiten (DP = 100), vorzugsweise eine Kettenlänge von mindestens 200 Wiederholungseinheiten auf. Dies führt überraschend zu den stark verbesserten mechanischen Eigenschaften. Durch die Verwendung von ausgewählten modifizierten Cellulosederivaten kann überraschend die Homogenität und Stabilität der Beschichtungslösung und somit auch der Beschichtung des Separators entscheidend verbessert werden.

Erfindungsgemäß wird durch einen solchen Separator die Sicherheit beim Betrieb von Li-Ionen-Zellen deutlich erhöht. Überraschend hat sich herausgestellt, dass ein mit Cellulosederivaten beschichteter Vliesstoff, wobei die Beschichtung harte, anorganische oder organische Füllstoffpartikeln und organische, flexible, elastomere Binderpartikeln aufweist, besonders gute mechanische Eigenschaften zeigt. Die Verwendung von Cellulosederivaten führt überdies überraschend zu einer homogenen Beschichtung. Weiter überraschend stellen sich eine sehr hohe Durchstoßfestigkeit und eine sehr hohe Weiterreißfestigkeit ein, die von ähnlichen Separatoren des Stands der Technik bisher nicht bekannt sind. Die Gefahr eines internen Kurzschlusses wird durch die verbesserten mechanischen Eigenschaften stark verringert, wobei die Permeabilität des Separators nicht negativ beeinflusst wird. Dies äußert sich in einer sehr niedrigen Gurleyzahl, die eine gut zugängliche und in der Fachwelt verbreitete Messgröße ist, um die Durchlässigkeit bzw. die Tortuosität von porösen Membranen zu bestimmen. Eine niedrige Gurleyzahl belegt, dass ein mikroskopischer Stofftransport durch den Separator problemlos erfolgt. Der Stofftransport korreliert mit dem Widerstand in der Batteriezelle. Insoweit ist ein Separator angegeben, der bei einer erhöhten mechanischen Stabilität eine hohe Permeabilität zeigt.

Folglich ist die eingangs genannte Aufgabe gelöst.

Die Cellulosederivate könnten als Celluloseether und/ oder Celluloseester ausgestaltet sein. Die Cellulosederivate Celluloseether und Celluloseester führen zu besonders stabilen Separatoren. Die Cellulosederivate haben einen Substitutionsgrad von 0,7, vorzugsweise von 0,9, um eine optimale hydrophile Masse innerhalb der Beschichtungslösung zu bilden. Hierdurch werden zum einen überraschend gute filmbildende Eigenschaften der Beschichtungslösung erhalten, zum anderen wird ein Agglomerieren der Füllstoffpartikeln entscheidend verhindert. Hierdurch wird eine nahezu perfekte homogene Beschichtung erzielt.

Durch die Verwendung von speziellen Tensiden, nämlich nichtionischen Tensiden, kann überraschend die Homogenität und Stabilität der Beschichtungslösungen und somit auch der Beschichtung des Separators entscheidend verbessert werden. Dies führt überraschend zu den stark verbesserten mechanischen Eigenschaften. Durch die Verwendung von geringen Anteilen von nichtionischen Tensiden von weniger als 5 %, bevorzugt von weniger als 2 %, besonders bevorzugt von weniger als 1 % am Feststoffgehalt der Beschichtung kann die Homogenität und Gleichmäßigkeit der Mischung überraschend stark verbessert werden.

Die Beschichtung könnte nichtionische Tenside enthalten, die Oktyl- und/ oder Nonylphenolethoxylate und/oder alkylierte Ethylenoxid/Polypropylenoxid-Copolymere aufweisen. Diese Tenside sind besonders gut geeignet, um die Homogenität der Beschichtungslösung positiv zu beeinflussen. Ionische Tenside hingegen können Agglomerationen der Füllstoffpartikeln bewirken und somit zu Entmischungen und/ oder Koagulationen der geladenen Füllstoffpartikeln innerhalb der Beschichtungslösung führen.

Die flexiblen, organischen Binderpartikeln könnten einen Anteil von mindestens 2 Gewichts %, bevorzugt von mindestens 5 Gewichts %, besonders bevorzugt von mindestens 10 Gewichts % der Beschichtung ausmachen. Hierdurch werden bereits sehr hohe Durchstoßfestigkeiten und Weiterreißfestigkeiten des Separators erzielt und gleichzeitig eine überraschend hohe Luftdurchlässigkeit. Bei einem Anteil von mindestens 11 % ergeben sich besonders hohe Durchstoßfestigkeiten des Separators.

Die Binderpartikeln könnten eine Größe von weniger als 1 µm (dso), bevorzugt von weniger als 0,5 µm (dso) und besonders bevorzugt von weniger als 0,3 µm (d₅₀) aufweisen, d₅₀ bezeichnet die mittlere Größe bzw. den mittleren Durchmesser der Partikeln.

Die Füllstoffpartikeln könnten eine maximale Größe von 5 µm (d₅₀) haben, bevorzugt von 2 µm (d 50), besonders bevorzugt könnten sie kleiner als 1 µm ( d₅₀) sein. Diese Füllstoffpartikelgrößen haben sich als geeignet erwiesen, einen Vliesstoff gut zu beschichten. Die Auswahl des mittleren Durchmessers aus diesem Bereich hat sich als besonders vorteilhaft erwiesen, um Kurzschlüsse durch Ausbildung von dendritartigen Durchwachsungen oder Abrieb zu vermeiden.

Die Füllstoffpartikeln sind im Grundkörper flächig homogen verteilt. Durch diese konkrete Ausgestaltung können Kurzschlüsse besonders wirksam verhindert werden. Metalldendriten und Abrieb können durch eine homogen belegte Fläche nahezu nicht hindurchwandern. Des Weiteren wird der unmittelbare Kontakt von Elektroden bei Druckbeaufschlagung durch eine solche Fläche vermieden. Vor diesem Hintergrund sind erfindungsgemäß sämtliche Poren des Vliesstoffes homogen derart mit den Füllstoffpartikeln ausgefüllt, dass der Separator vorwiegend mittlere Porengrößen zeigt, die kleiner sind als die mittleren Durchmesser der Füllstoffpartikeln.

Die Füllstoffpartikeln sind erfindungsgemäß durch Binderpartikeln mit dem Vliesstoff bzw. untereinander verbunden. Dabei könnten die Binderpartikeln aus organischen Polymeren bestehen. Die Verwendung von Binderpartikeln aus organischen Polymeren erlaubt es, einen Separator mit ausreichender mechanischer Flexibilität herzustellen. Ausgezeichnete Bindereigenschaften zeigt überraschenderweise Styrolbutadien.

In bevorzugten Ausführungsformen könnten die Binderpartikeln eine Polyvinylverbindung, ein Kautschuk, ein halogeniertes Polymer und/oder ein ungesättigtes Polymer enthalten.

Die Binderpartikeln könnten in Form von Homopolymeren oder als Copolymere eingesetzt werden. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere).

Erfindungsgemäß werden elastomere Binderpartikeln verwendet. Beispielhaft seien vor diesem Hintergrund Polyvinylidenfluorid und Copolymere aus den vorgenannten, Nitrilkautschuk (NBR), Styrolbutadienkautschuk (SBR) sowie Latex genannt.

In einer bevorzugten Ausführungsform könnte das Polymer, aus dem die Binderpartikeln gefertigt sind, ein ungesättigtes Polymer sein. Die ungesättigten Gruppen können dabei beispielsweise Kohlenstoff-Kohlenstoff-Doppel- oder Dreifachbindungen oder Kohlenstoff-Stickstoff-Doppel- oder Dreifachbindungen sein. Bevorzugt sind C=C Doppelbindungen. Diese können gleichmäßig in dem Polymer verteilt sein, wie beispielsweise bei durch Polymerisation von Dienen erhältlichen Polymeren. Solche Polymere können auch teilweise hydriert sein. Alternativ können Polymergrundgerüste mit Resten gekoppelt werden, die ungesättigte Gruppen enthalten. Ungesättigte Polymere zeichnen sich im Allgemeinen durch gute Klebeeigenschaften aus.

In einer bevorzugten Ausführungsform könnte das Polymer, aus dem die Binderpartikeln gefertigt sind, ein Polyvinylether sein. Geeignete Monomerbausteine sind beispielsweise Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluormethyl-, Hexafluorpropyl- oder Tetrafluorpropylvinylether. Dabei können beispielsweise Homopolymere oder Copolymere, insbesondere Blockcopolymere, eingesetzt werden. Die Copolymere können aus verschiedenen monomeren Vinylethern bestehen oder Copolymere aus Vinylethermonomeren mit anderen Monomeren sein. Polyvinylether sind als Binder besonders geeignet, da sie sehr gute Klebe- und Haftungseigenschaften aufweisen.

In einer bevorzugten Ausführungsform könnte das Polymer, aus dem die Binderpartikeln gefertigt sind, ein fluoriertes oder halogeniertes Polymer sein. Dieses kann beispielsweise aus Vinylidenfluorid (VDF), Hexafluorpropylen (HFP) oder Chlortrifluorethylen (CTFE) hergestellt sein oder solche Monomerbausteine enthalten. Dabei können beispielsweise Homopolymere oder Copolymere, insbesondere Blockcopolymere eingesetzt werden. Die Copolymere können aus verschiedenen halogenierten Monomeren bestehen oder Copolymere aus halogenierten Monomeren mit anderen Monomeren sein. Die Polymere und Monomere können vollständig fluoriert oder chloriert oder teilweise fluoriert oder chloriert sein. In einer besonderen Ausführungsform der Erfindung beträgt der Comonomeranteil der halogenierten Monomere, insbesondere von HFP und CTFE, an dem gesamten Polymer zwischen 1 bis 25 Gew.-%. Halogenierte Polymere zeichnen sich im allgemeinen durch eine hohe Temperaturbeständigkeit und Chemikalienbeständigkeit sowie durch eine gute Benetzbarkeit aus. Sie sind besonders als Binder geeignet, wenn fluorierte oder teilfluorierte Partikeln zur Füllung des Vlieses verwendet werden. Durch den Einsatz von Copolymeren können die Temperaturbeständigkeit und die Verarbeitungstemperatur über einen breiten Temperaturbereich variiert werden. Dadurch kann die Verarbeitungstemperatur des Binders an die Schmelztemperatur der Partikeln angepasst werden.

In einer weiteren Ausführungsform könnte das Polymer, aus dem die Binderpartikeln gefertigt sind, eine Polyvinylverbindung sein. Geeignet sind insbesondere solche, die aus N-Vinylamidmonomeren wie N-Vinylformamid und N-Vinylacetamid bestehen oder diese Monomere enthalten. Geeignet sind insbesondere die entsprechenden Homopolymere und Copolymere, wie Blockcopolymere. Die Poly-N-Vinylverbindungen zeichnen sich durch eine gute Benetzbarkeit aus.

In einer bevorzugten Ausführungsform könnte das Polymer, aus dem die Binderpartikeln gefertigt sind, ein Kautschuk sein. Es sind allgemein bekannte Kautschuke einsetzbar, wie Ethylen-Propylen-Dien-Kautschuk (EPDM-Kautschuk). Insbesondere EPDM-Kautschuk weist eine hohe Elastizität und eine gute chemische Beständigkeit insbesondere gegenüber polaren organischen Medien auf und ist über einen breiten Temperaturbereich einsetzbar. Es können auch Kautschuke eingesetzt werden, ausgewählt aus Naturkautschuk, Isopren-Kautschuk, Butadien-Kautschuk, ChloroprenKautschuk, Styrol-Butadien-Kautschuk oder Nitril-Butadien-Kautschuk. Diese Kautschuke enthalten ungesättigte Doppelbindungen. Sie zeichnen sich durch eine gute Klebewirkung aus. Dabei können beispielsweise Homopolymere oder Copolymere, insbesondere Blockcopolymere eingesetzt werden.

Es sind auch fluorierte Kautschuke einsetzbar, wie Perfluorkautschuk (FFKM), Fluor-Kautschuk (FKM) oder Propylen-Tetrafluorethylen-Kautschuk (FPM), sowie Copolymere davon. Besonders bevorzugt ist FFKM. Diese Polymere, insbesondere FFKM, zeichnen sich durch einen hohen Temperatureinsatzbereich, sehr gute Medien- und Chemikalienbeständigkeit und sehr geringe Quellung aus. Sie sind daher insbesondere für Anwendungen in aggressiver Umgebung bei hohen Temperaturen geeignet, wie in Brennstoffzellen.

In einer bevorzugten Ausführungsform könnte das Polymer, aus dem die Binderpartikeln gefertigt sind, ein Polyester oder ein Polyamid oder ein Copolymer davon sein. Die Copolymere können aus verschiedenen Polyamid und/oder Polyester-Monomeren bestehen oder Copolymere aus solchen Monomeren mit anderen Monomeren sein. Solche Binderpartikeln zeichnen sich durch sehr gute Haftungseigenschaften aus.

Die Binderpartikeln könnten auch siliciumhaltige und/oder silicium-organische Polymere enthalten. In einer Ausführungsform werden Siloxane als Binder eingesetzt. In einer weiteren Ausführungsform werden Silylverbindungen und/oder Silane als Binderpartikeln eingesetzt. Diese Binderpartikeln, insbesondere Silylverbindungen und/oder Silane, werden bevorzugt eingesetzt, wenn die Füllstoffpartikeln vollständig oder zumindest zum Teil organische Partikeln sind.

Der Schmelzpunkt der Binderpartikeln und/oder der Füllstoffpartikeln könnte unter den Schmelzpunkten der Fasern des Vliesstoffs liegen. Durch die Auswahl solcher Binder- bzw. Füllstoffpartikeln kann der Separator einen so genannten "Shut-Down-Mechanismus" realisieren. Bei einem "Shut-Down-Mechanismus" verschließen die aufschmelzenden Partikeln die Poren des Vliesstoffs, so dass keine dendritartigen Durchwachsungen durch die Poren und somit Kurzschlüsse auftreten können.

Vor diesem Hintergrund ist denkbar, dass Mischungen aus Füllstoffpartikeln und/ oder Binderpartikeln mit unterschiedlichen Schmelzpunkten verwendet werden. Hierdurch kann ein schrittweises oder stufenweises Verschließen der Poren mit zunehmender Temperatur bewirkt werden.

Die Füllstoffpartikeln könnten aus organischen Polymeren bestehen. Geeignete Polymere sind beispielsweise Polyacetale, Polycycloolefin-Copolymere, Polyester, Polyimide, Polyetherketone, Polycarboxylate und halogenierte Polymere.

Die organischen Polymere könnten Homopolymere oder Copolymere sein. Als Copolymere sind beispielsweise statistische Copolymere, Gradientencopolymere, alternierende Copolymere, Blockcopolymere oder Propfpolymere geeignet. Die Copolymere können aus zwei, drei oder mehr verschiedenen Monomeren bestehen (Terpolymere, Tetrapolymere). Die genannten Materialien können auch in Form von Gemischen zu Partikeln verarbeitet werden. Allgemein sind thermoplastische Polymere und Polymergemische einsetzbar oder vernetzte Polymere und Polymergemische, wie Elastomere oder Duroplaste.

Die Füllstoffpartikeln könnten insbesondere aus Polypropylen, Polyethylen, Polyvinylpyrrolidon, Polyvinylidenfluorid, Polyester, Polytetrafluorethylen (PTFE), Perfluor-Ethylen-Propylen (FEP), Polystyrol, Polyacrylaten sowie Copolymeren der zuvor genannten Polymere gefertigt sein. Besonders bevorzugt sind Homopolymere, Copolymere oder Blockcopolymere des Vinylidenfluorids (VDF), des Polytetrafluorethylens (PTFE) und des Polyoxymethylens (POM, auch Polyacetal oder Polyformaldehyd genannt).

In einer bevorzugten Ausführungsform der Erfindung bestehen die Füllstoffpartikeln aus Polyacetalen, wie Polyoxymethylen (POM), oder die Füllstoffpartikeln enthalten Polyacetale. Es können auch Copolymere von Acetalen eingesetzt werden, beispielsweise mit Trioxan als Comonomer. Polyacetale zeichnen sich durch eine ausgezeichnete Form- und Temperaturbeständigkeit aus. Sie weisen außerdem nur eine geringe Wasseraufnahme auf. Dies ist erfindungsgemäß vorteilhaft, da der gefüllte Vliesstoff insgesamt dann nur wenig Wasser aufnimmt.

In einer weiteren Ausführungsform der Erfindung könnten die Füllstoffpartikeln aus Cyclo-Olefin-Copolymeren (COC) bestehen oder diese enthalten. Die thermischen Eigenschaften von COC lassen sich durch Veränderung der Einbauverhältnisse von zyklischen und linearen Olefinen in einem weiten Bereich gezielt verändern und damit an die gewünschten Einsatzbereiche anpassen. Im Wesentlichen kann damit die Wärmeformbeständigkeit in einem Bereich von 65 bis 175 °C eingestellt werden. Die COC zeichnen sich durch eine äußerst geringe Wasseraufnahme und sehr gute elektrische Isolationseigenschaften aus.

In einer weiteren Ausführungsform der Erfindung könnten die Füllstoffpartikeln aus Polyestern bestehen oder diese enthalten. Bevorzugt sind insbesondere flüssigkristalline Polyester (LCP). Diese werden beispielsweise unter der Handelsbezeichnung "Vectra LCP" von der Firma Ticona angeboten. Flüssigkristalline Polyester zeichnen sich durch eine hohe Dimensionsstabilität, hohe Temperaturbeständigkeit und gute Chemikalienbeständigkeit aus.

In einer weiteren Ausführungsform der Erfindung könnten die Füllstoffpartikeln aus Polyimiden (PI) oder Copolymeren davon bestehen oder diese enthalten. Geeignete Copolymere sind beispielsweise Polyetherimide (PEI) und Polyamidimide (PAI). Der Einsatz von Polyimiden ist vorteilhaft, weil sie eine hohe mechanische Festigkeit und eine hohe Temperaturbeständigkeit aufweisen. Sie zeigen außerdem gute Oberflächeneigenschaften, die sich gezielt von hydrophil bis hydrophob einstellen lassen.

In einer bevorzugten Ausführungsform der Erfindung könnten die Füllstoffpartikeln aus einem fluorierten oder halogenierten Polymer bestehen oder dieses enthalten. Dieses kann beispielsweise aus Vinylidenfluorid (VDF), Polytetrafluorethylen (PTFE), Hexafluorpropylen (HFP) oder Chlortrifluorethylen (CTFE) hergestellt sein. Dabei können beispielsweise Homopolymere oder Copolymere, insbesondere Blockcopolymere eingesetzt werden. Die Copolymere können aus verschiedenen halogenierten Monomeren bestehen oder Copolymere aus halogenierten Monomeren mit anderen Monomeren sein. Die Polymere und Monomere können vollständig fluoriert oder chloriert oder teilweise fluoriert oder chloriert sein. In einer besonderen Ausführungsform der Erfindung beträgt der Comonomeranteil der halogenierten Monomere, insbesondere von HFP und CTFE, an dem gesamten Polymer zwischen 1 bis 25 Gew. %. Die halogenierten Polymere zeichnen sich durch ein hohe Temperaturbeständigkeit und Chemikalienbeständigkeit sowie durch eine gute Benetzbarkeit aus. Sie sind besonders zur Verwendung mit fluorierten oder teilfluorierten Binderpartikeln geeignet. Durch den Einsatz und die Auswahl von Copolymeren können die Temperaturbeständigkeit und die Verarbeitungstemperatur über einen breiten Temperaturbereich variiert werden. Dadurch kann die Verarbeitungstemperatur der Binderpartikeln an die Schmelztemperatur der Füllstoffpartikeln angepasst werden. Außerdem wird die Einstellung einer Shut-Down-Temperatur ermöglicht.

Besonders bevorzugt könnte ein Copolymers aus PTFE und Perfluoro-3,6-dioxa-4-methyl-7-octen-sulfonsäure (PFSA) verwendet werden. Dieses ist unter der Handelsbezeichnung Nation von der Firma Dupont erhältlich. Es ist erfindungsgemäß vorteilhaft, weil es eine gute Kationen- und Protonenleitfähigkeit aufweist.

Die Verwendung organischer Polymere für die Füllstoffpartikeln erlaubt ein problemloses Aufschmelzen der Partikeln zur Erzielung eines "Shut-Down-Effektes". Des Weiteren kann ein Separator gefertigt werden, der sich problemlos zuschneiden lässt, ohne zu zerbröseln. Ein Zerbröseln des Separators tritt meist dann auf, wenn ein relativ hoher Anteil an anorganischen Füllstoffpartikeln im Separator vorliegt. Vor diesem Hintergrund ist denkbar, Mischungen unterschiedlicher Füllstoffpartikeln oder Core-Shell-Partikeln zu verwenden. Hierdurch kann ein schrittweises oder stufenweises Verschließen der Poren im Separator mit zunehmender Temperatur bewirkt werden.

Die einsetzbaren Binderpartikeln und Füllstoffpartikeln, insbesondere die organischen Füllstoffpartikeln, sind bevorzugt in hohem Maße temperaturbeständig. Vorzugsweise sind die Binderpartikeln und/oder die Füllstoffpartikeln bei Temperaturen von 100, 150, 175 oder 200 °C beständig. Dies ermöglicht den Einsatz in Brennstoffzellen.

Denkbar ist auch, anorganische Füllstoffpartikeln oder anorganisch-organische Hybridpartikeln einzusetzen. Diese Füllstoffpartikeln schmelzen nicht unterhalb einer Temperatur von 400° C. Des Weiteren können diese Füllstoffpartikeln mit basischen Eigenschaften gewählt werden, um die in Batterien vorliegende Protonenaktivität zumindest teilweise zu vermindern.

Als anorganische Füllstoffpartikeln sind beispielsweise Metalloxide, Metallhydroxide und Silikate geeignet. Diese können aus Aluminiumoxiden, Siliciumoxiden, Zeolithen, Titanaten und/oder Perowskiten bestehen oder diese enthalten. Es sind auch Mischungen dieser Füllstoffpartikeln oder Gemische mit anderen Materialien einsetzbar.

In einer Ausführungsform der Erfindung könnten anorganische Füllstoffpartikeln mit organischen Füllstoffpartikeln gemischt eingesetzt werden. Die anorganischen Füllstoffpartikeln können intrinsisch eine zerklüftete oder poröse Struktur aufweisen und erhöhen somit die Porosität, insbesondere von Füllstoffpartikelngemischen. Sie weisen auch eine hohe Temperaturbeständigkeit, eine hohe chemische Beständigkeit und eine gute Benetzbarkeit auf. So können beispielsweise Gemische aus organischen und anorganischen Füllstoffpartikeln eingesetzt werden, bei denen bis zu 2, 5, 10, 25 oder 50 Gew.-% der Füllstoffpartikeln anorganische Füllstoffpartikeln sind.

Es könnten auch anorganische Füllstoffpartikeln eingesetzt werden, die kugelförmig sind oder deren äußere Form eine gleichmäßige Anordnung von Flächen aufweist, die einer Kugel nahekommt. Solche Füllstoffpartikeln sind beispielsweise durch Kristallisation erhältlich.

Der hier beschriebene Vliesstoff ist im Gegensatz zu bekannten Vliesstoffen auch ohne anorganische Füllstoffpartikeln herstellbar. In einer Ausführungsform der Erfindung sind keine anorganischen Füllstoffpartikeln oder Füllstoffpartikeln mit anorganischen Bestandteilen enthalten.

Die einsetzbaren Füllstoffpartikeln könnten nach bekannten Methoden hergestellt werden. So sind Verfahren bekannt, bei denen geeignete, insbesondere kugelförmige, Füllstoffpartikeln bereits als Reaktionsprodukt der Polymerisation erhalten werden. Bevorzugte Verfahren sind die Emulsions- oder Dispersionspolymerisation.

In einer weiteren Ausführungsform könnten die Füllstoffpartikeln durch Weiterverarbeitung von Polymeren erhalten werden. Beispielsweise können Polymergranulate gemahlen werden. Gegebenenfalls werden anschließend Trennverfahren eingesetzt, wie das Sieben, um die gewünschte Größenverteilung zu erhalten. Die Füllstoffpartikeln können aus Mischungen unterschiedlicher Partikelgrößen bestehen. Dadurch lässt sich die Porosität und die Porengrößenverteilung variieren.

Die Fasern des Vliesstoffs könnten aus organischen Polymeren, insbesondere aus Polybutylterephtalat, Polyethylenterephthalat, Polyacrylnitril, Polyvinylidenfluorid, Polyetheretherketonen, Polyethylennaphtalat, Polysulfonen, Polyimid, Polyester, Polypropylen, Polyethylen, Polyoxymethylen, Polyamid oder Polyvinylpyrrolidon gefertigt sein. Denkbar ist auch, Bikomponentenfasern einzusetzen, welche die zuvor genannten Polymere aufweisen. Die Verwendung dieser organischen Polymere erlaubt es, einen Separator herzustellen, der nur einen geringen thermischen Schrumpf zeigt. Des Weiteren sind diese Materialien weitgehend elektrochemisch stabil gegenüber den in Batterien und Kondensatoren eingesetzten Elektrolyten und Gasen.

Die mittlere Länge der Fasern des Vliesstoffs könnte deren mittleren Durchmesser um mindestens das zweifache, vorzugsweise ein Vielfaches übersteigen. Durch diese konkrete Ausgestaltung kann ein besonders reißfester Vliesstoff gefertigt werden, da die Fasern miteinander verschlungen werden können.

Mindestens 90% der Fasern des Vliesstoffs könnten einen mittleren Durchmesser von höchstens 12 µm aufweisen. Diese konkrete Ausgestaltung erlaubt den Aufbau eines Separators mit relativ geringen Porengrößen. Eine noch feinere Porosität kann dadurch erzielt werden, dass mindestens 40% der Fasern des Vliesstoffs einen mittleren Durchmesser von höchstens 8 µm aufweisen.

Der Separator könnte durch eine Dicke von höchstens 100 µm gekennzeichnet sein. Ein Separator dieser Dicke lässt sich noch problemlos aufwickeln und erlaubt einen sehr sicheren Batteriebetrieb. Bevorzugt könnte die Dicke höchstens 60 µm betragen. Diese Dicke erlaubt eine verbesserte Aufwickelbarkeit und dennoch einen sicheren Batteriebetrieb. Besonders bevorzugt könnte die Dicke höchstens 35 µm betragen. Mit Separatoren einer solchen Dicke können sehr kompakt bauende Batterien und Kondensatoren gebaut werden. Am meisten bevorzugt könnte die Dicke höchstens 25 µm betragen. Mit Separatoren einer solchen Dicke können Batterien mit eine hohen Energiedichte gebaut werden.

Der Separator könnte eine Porosität von mindestens 25 % aufweisen. Ein Separator dieser Porosität unterdrückt aufgrund seiner Materialdichte besonders effektiv die Ausbildung von Kurzschlüssen. Bevorzugt könnte der Separator eine Porosität von mindestens 35 % aufweisen. Durch einen Separator dieser Porosität kann eine Batterie mit hoher Leistungsdichte erzeugt werden. Der hier beschriebene Separator zeigt bei hoher Porosität dennoch sehr kleine Poren, so dass sich keine dendritartigen Durchwachsungen von einer Seite zur anderen Seite der Lage ausbilden können. Vor diesem Hintergrund ist denkbar, dass die Poren ein labyrinthartiges Gefüge ausbilden, in dem sich keine dendritartigen Durchwachsungen von einer Seite zur anderen Seite des Separators ausbilden können. In einer weiteren Ausführungsform liegt die Porosität zwischen 25 und 70, bevorzugt zwischen 35 und 60%, besonders bevorzugt zwischen 45 und 55 %.

Der Separator könnte Porengrößen von höchstens 10 µm, bevorzugt von höchstens 3 µm aufweisen. Die Auswahl dieser Porengröße hat sich als besonders vorteilhaft erwiesen, um Kurzschlüsse zu vermeiden. Besonders bevorzugt könnten die Porengrößen höchstens 1 µm betragen. Ein solcher Separator vermeidet besonders vorteilhaft Kurzschlüsse durch Metalldendritenwachstum, durch Abrieb aus Elektrodenpartikeln und durch unmittelbaren Kontakt der Elektroden bei Druckbeaufschlagung.

Das Flächengewicht des erfindungsgemäßen Separators könnte zwischen 10 und 60, insbesondere zwischen 15 und 50 g/m² liegen.

Der Separator könnte eine Weiterreißfestigkeit in Querrichtung von mindestens 0,3 N, bevorzugt von mindestens 0,5 N, und eine Weiterreißfestigkeit in Längsrichtung von mindestens 0,3 N, bevorzugt von 0,4 N zeigen. Ein solcher Separator ist äußerst stabil und kann problemlos aufgewickelt werden. Die höhere Beständigkeit gegen Weiterreißen verringert auch die Empfindlichkeit des Materials gegenüber der mechanischen Beanspruchung beim Zuschneiden in Längs- und Querrichtung. Außerdem verbessert sie die Sicherheitseigenschaften, wenn in Biegeversuchen das Aufprallverhalten einer Batterie in automobilen Anwendungen geprüft wird.

Der Separator könnte seine isolierende Wirkung bei einer Positionierung zwischen zwei leitfähigen Elektroden bei Beaufschlagung mit einer Kraft von mindestens 500 N, bevorzugt von mindestens 600 N, besonders bevorzugt von mindestens 700 N, verlieren, wobei mit dieser Kraft ein Stempel mit einem kugelförmigen Kopf und einem Durchmesser von 6 mm auf den Verbund aus Separator und Elektroden gedrückt wird. Ein solcher Separator weist eine hohe Stabilität und Durchstoßfestigkeit auf.

Durch eine Kalandrierung könnte der Separator mechanisch verfestigt werden. Die Kalandrierung bewirkt eine Reduzierung der Oberflächenrauhigkeit. Die an der Oberfläche des Vliesstoffs eingesetzten Füllstoffpartikeln und/ oder Binderpartikeln zeigen nach der Kalandrierung Abplattungen.

Die Beschichtung könnte Unebenheiten aufweisen, die aus der Ebene maximal 1 µm herausragen und/ oder könnte die Beschichtung Vertiefungen aufweisen, die eine Tiefe von maximal 1 µm aufweisen. Untersuchungen an einem 30 µm dicken Separator haben gezeigt, dass die Beschichtung Unebenheiten aufweist, die aus der Ebene maximal 1 µm herausragen. Des Weiteren weisen Vertiefungen der Beschichtung eine Tiefe von maximal 1 µm auf. Durch einen solchen Separator wird das Alterungsverhalten der Batterie günstig beeinflusst.

Die flexiblen organischen Binderpartikeln könnten einen Erweichungspunkt oder Glaspunkt von kleiner gleich 20° Celsius, besonders bevorzugt kleiner gleich 0° Celsius aufweisen. Unter flexiblen organischen Binderpartikeln im Sinne dieser Beschreibung werden Partikeln mit einem Erweichungspunkt oder Glaspunkt von kleiner gleich 20° Celsius verstanden. Die Kombination von diesen flexiblen organischen Binderpartikeln mit harten Füllstoffpartikeln führt zu einem gummiartig hochduktilen Verhalten des Separators und bewirkt eine ausgeprägte Zunahme der Verformungsbeständigkeit.

Der hier beschriebene Separator kann insbesondere in Batterien und Kondensatoren als Separator eingesetzt werden, da er Kurzschlüsse besonders wirksam verhindert.

Er kann auch in Brennstoffzellen als Gasdiffusionsschicht oder Membran Verwendung finden, da er gute Benetzungseigenschaften zeigt und Flüssigkeiten transportieren kann.

Unter einem Separator im Sinne dieser Beschreibung wird ein Verbund mit den Merkmalen des Patentanpruchs 1 verstanden.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Messaufbau zur Bestimmung der Durchstoßfestigkeiten von Separatoren,
- Fig. 2: ein Diagramm zum Vergleich der Durchstoßfestigkeiten von Separatoren,
- Fig. 3: ein Diagramm, welches die Weiterreißfestigkeiten von Separatoren in Längsrichtung zeigt,
- Fig. 4: ein Diagramm, welches die Weiterreißfestigkeiten von Separatoren in Querrichtung zeigt,
- Fig. 5: ein Diagramm, welches die Gurleyzahlen für Separatoren zeigt,
- Fig. 6: eine schematische Darstellung eines Probenkörpers zur Durchführung des Weiterreißfestigkeitstest und
- Fig. 7: eine rasterelektronenmikroskopische (REM) Aufnahme des Ausführungsbeispiels 3, welche belegt, wie gleichmäßig und hochqualitativ die Beschichtung bzw. Tränkung ist.

### Ausführung der Erfindung

### Ausführungsbeispiele:

### Beispiel 1:

Zu 251 Teilen einer 2,5 % -igen Carboxymethylcelluloselösung wurden 221 Teile einer 70% igen Aluminiumoxiddispersion (Al₂O₃)(d₅₀ = 0,7 µm) gegeben und für 30 Minuten gerührt. Dann wurden 10 Teile eines Alkylphenolethoxylats und daraufhin 24 Teile einer 48 % igen kolloidalen NBR-Dispersion (pH = 9,6; T_{G} = -12°C (Glastermperatur)), ebenfalls unter Rühren, hinzugefügt. Die Lösung wurde 2 Stunden gerührt und mindestens 24 Stunden auf Stabilität getestet. Die Viskosität der erhaltenen Lösung betrug 290 cP. Der Anteil der flexiblen, organischen Binderpartikeln an der Beschichtung beträgt 6,3 %.

### Beschichtung:

Ein 65 cm breiter PET-Vliesstoff (Dicke: 22 µm, Flächengewicht: 11 g/m²) wurde mittels eines Walzenbeschichtungsverfahren mit obiger Lösung kontinuierlich beschichtet und bei 125°C kontaktfrei getrocknet.

Es wurde ein beschichteter Vliesstoff mit einem Flächengewicht von 49 g/m² und einer Dicke von 40 µm erhalten. Die mittlere Porengröße des beschichteten Vliesstoffes betrug 0,2 µm.

### Beispiel 2:

Zu 98010 Teilen einer 1,5 % igen Carboxymethylcelluloselösung wurden 46594 Teile einer 66% igen Aluminiumoxiddispersion (Al₂O₃, d₅₀ = 2,5 µm) gegeben und 30 Minuten lang gerührt. Daraufhin wurden 3000 Teile eines Alkylphenolethoxylats und anschließend 5396 Teile einer flexiblen 48 % igen kolloidalen NBR-Dispersion (pH = 9,6; T_{G} = -12°C) ebenfalls unter Rühren, hinzugefügt. Die Lösung wurde 3 Stunden gerührt und mindestens 24 Stunden auf Stabilität getestet. Die Viskosität der erhaltenen Lösung betrug 100 cP. Der Feststoffanteil der flexiblen, organischen Binderpartikeln an der Beschichtung beträgt 7,4 %.

### Beschichtung:

Ein 58 cm breiter PET-Vliesstoff (Dicke: 19 µm, Flächengewicht: 11 g/m²) wurde mittels eines Walzenbeschichtungsverfahren mit obiger Lösung kontinuierlich beschichtet und bei einer Temperatur von 120°C getrocknet. Es wurde ein imprägnierter Vliesstoff mit einem Flächengewicht von 35 g/m² und einer Dicke von 36 µm erhalten. Die mittlere Porengröße betrug 0,2 µm.

### Beispiel 3:

Zu 251 Teilen einer 2% igen Carboxymethylcelluloselösung wurden 221 Teile einer 65 % igen Aluminiumoxidsuspension (Al2O3, d₅₀ = 2 µm) gegeben und für 30 Minuten gerührt. Daraufhin wurden 5 Teile eines Alkylphenolethoxylats und anschließend 40 Teile einer 48% igen kolloidalen NBR-Binderdispersion ebenfalls unter Rühren hinzugefügt. Die Lösung wurde 3 Stunden gerührt und mindestens 24 Stunden auf Stabilität getestet. Die Viskosität der erhaltenen Lösung betrug 290 cP. Der Feststoffanteil der flexiblen, organischen Binderpartikeln beträgt 11,1 %.

### Beschichtung:

Ein 58 cm breiter PET-Vliesstoff (Dicke: 20µm, Flächengewicht: 11 g/m²) wurde mittels eines Walzenbeschichtungsverfahren mit obiger Lösung kontinuierlich beschichtet und bei einer Temperatur von 120°C getrocknet.

Es wurde ein imprägnierter Vliesstoff mit einem Flächengewicht von 31 g/m² und einer Dicke von 34 µm erhalten. Die mittlere Porengröße betrug 0,6 µm.

### Vergleichsbeispiel 1:

Typ Celgard 2320, Dreilagentrockenmembran
(Polypropylen/Polyethylen/Polypropylen), Dicke 20µm

### Vergleichsbeispiel 2:

Typ Tonen E 16 MMS, Nassmembran (Polyolefin), Dicke 15µm

### Vergleichsbeispiel 3:

Keramik-Separator, Dicke : 31 µm

Zur Bestimmung des Gewichts, der Dicke, der Durchstoßfestigkeit, der Weiterreißfestigkeit und der Gurleyzahlen wurden die folgenden Messmethoden angewendet:

### Gewicht:

Angelehnt an die Prüfvorschrift EN 29073 - T1 wurden für die Bestimmung der Flächengewichte jeweils drei 100x100 mm große Proben ausgestanzt, die Proben gewogen und der Messwert mit 100 multipliziert.

### Dicke:

Angelehnt an die Prüfvorschrift EN 29073 - T2 wurden die Dicken mit einem Präzisions-Dickenmessgerät Modell 2000 U/ Elektrik gemessen. Die Messfläche betrug 2 cm², der Messdruck 1000 cN/cm².

### Durchstoßfestigkeit:

Diese Methode ist angelehnt an:
"Battery Conference on Applications and Advances, 1999. The Fourteenth Annual", Seite 161 - 169.

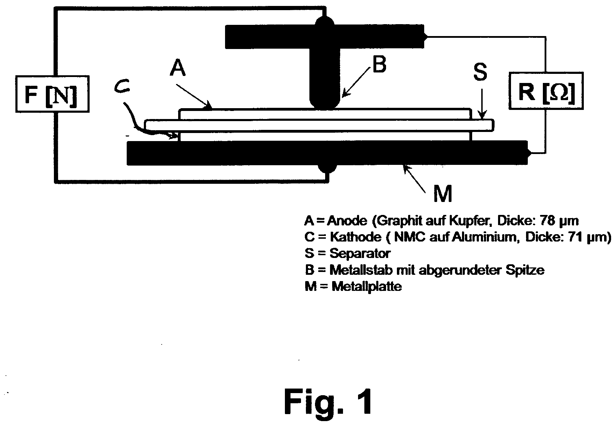

Bei dieser Methode wird die benötigte Kraft bestimmt, mit der ein Separator unter definierten Bedingungen beaufschlagt werden muss, damit dieser seine elektrische Isolationswirkung verliert. Die Messanordnung ist in Fig. 1 dargestellt. Der zu untersuchende Separator S wird zwischen einer Anode A (Graphit auf Kupferfolie, Gesamtdicke: 78 µm, kommerziell erhältlich) und einer Kathode C (Nickelmangancobaltoxid auf Aluminiumfolie, Dicke 71 µm, kommerziell erhältlich) gelegt, um die Anordnung in einer Batteriezelle nachzustellen. Diese drei Lagen werden auf einer gehärteten und polierten Stahlplatte M platziert, von der oberen Seite wird ein abgerundeter und ebenfalls gehärteter Metallstempel B (Durchmesser = 6 mm) auf die Probe gesetzt und dieser Metallstempel B mit der Eisenplatte M kontaktiert. Es wird solange der Druck auf die drei Lagen (Batteriekomponentenverbund) erhöht, bis es zu einem Kurzschluss kommt, der Separator S also beschädigt ist und Anode A und Kathode C in direkten Kontakt geraten. Es wird die Kraft auf den Metallstempel B gemessen, bei der der elektrische Widerstand R schlagartig unter 100 000 Ohm fällt.

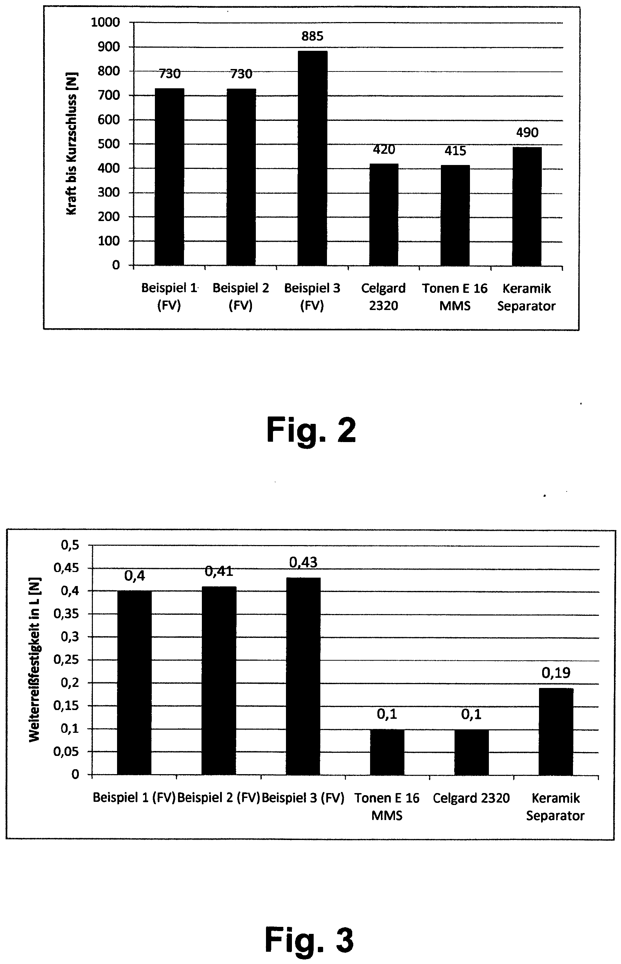

Die an den Beispielen und Vergleichsbeispielen gemessenen Kräfte sind in Fig. 2 in einem Diagramm dargestellt. Man erkennt, dass die für die Beispiele 1 bis 3 aufzuwendenden Kräfte mit 730 N bzw. 885 N deutlich oberhalb der Kräfte 420 N, 415 N, 490 N der Vergleichsbeispiele liegen. Die erfindungsgemäßen Separatoren sind daher bedeutend stabiler als die Separatoren des Stands der Technik.

### Weiterreißfestigkeit:

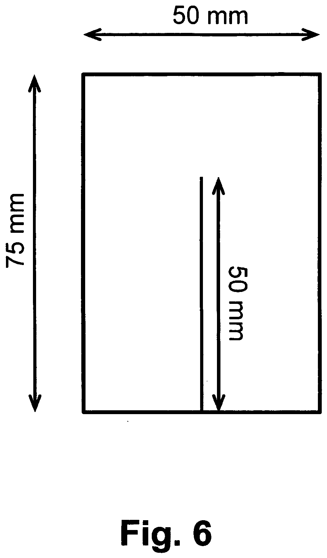

Angelehnt an Prüfvorschrift DIN 53859 wurden die Weiterreißfestigkeiten der Separatoren bestimmt. Hierfür wurden jeweils drei Probenkörper in MD ("machine direction", Fertigungsrichtung des Vliesstoffs) und CD ("cross direction", orthogonal zur Fertigungsrichtung des Vliesstoffs) mit der Größe 75 X 50 mm und einem Einschnitt von 50 mm ausgestanzt. Dies ist in Fig. 6 schematisch dargestellt. Die durch den Einschnitt entstandenen Schenkel der Messproben werden in Einspannklemmen einer Zugprüfmaschine eingespannt (Klemmenabstand 50 mm) und mit einer Abzugsgeschwindigkeit von 200 mm/min auseinandergezogen. Da Separatoren oft nicht in der Schnittrichtung weiterreißen, sind auch die Messproben zu berücksichtigen, die seitlich ausreißen. Es wurde der Durchschnitt aus den ermittelten Werten gebildet.

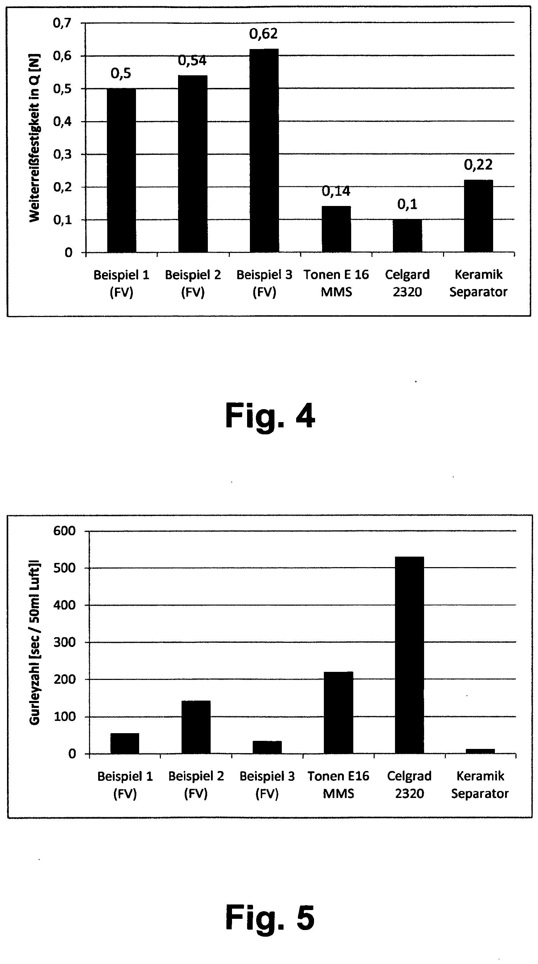

In den Fig. 3 und 4 sind die an den Beispielen und Vergleichsbeispielen gemessenen Werte der Weiterreißfestigkeit aufgetragen. Auch hier ist erkennbar, dass die erfindungsgemäßen Separatoren bedeutend stabiler als die Separatoren des Stands der Technik sind.

### Gurleyzahl:

Angelehnt an Prüfvorschrift (ISO 9237) wurden die Gurleyzahlen der Separatoren mittels eines Standard Gurley Densometers der Firma Frank Prüfgeräte GmbH (Modell F40450) bestimmt. Die Messfläche betrug 6,4516 cm², das Luftvolumen 50 cm³. Die Werte der gemessenen Gurleyzahlen sind in Fig. 5 dargestellt und liegen unter 150 s/ 50 ml Luft, bevorzugt unter 100 s/ 50 ml Luft.

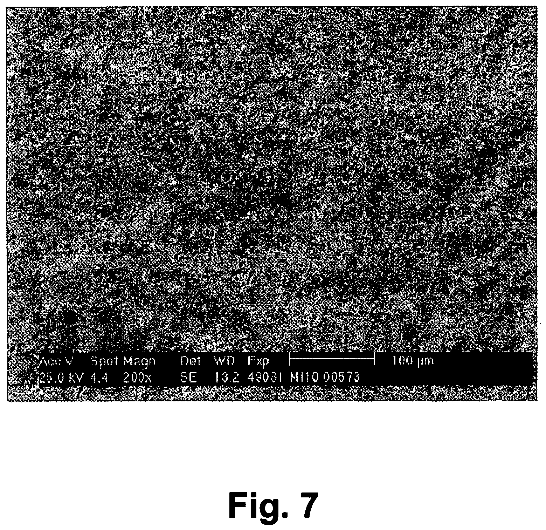

Fig. 7 zeigt eine rasterelektronenmikroskopische Aufnahme eines erfindungsgemäßen Separators. In Fig. 7 ist deutlich erkennbar, wie homogen und gleichmäßig die Cellulosederivate umfassende Beschichtung ist.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Separator mit einem Grundkörper aus Vliesstoff, wobei der Grundkörper mit einer Beschichtung versehen ist, wobei die Beschichtung Füllstoffpartikel und Cellulose enthält, wobei die Füllstoffpartikel im Grundkörper flächig homogen verteilt sind und sämtliche Poren des Vliesstoffes homogen derart mit den Füllstoffpartikeln ausgefüllt sind, dass der Separator vorwiegend mittlere Porengrößen zeigt, die kleiner sind als die mittleren Durchmesser der Füllstoffpartikeln, wobei die Beschichtung flexible, organische Binderpartikel enthält, wobei die Cellulose Cellulosederivate enthält, die eine Kettenlänge von mindestens 100 Wiederholungseinheiten aufweisen und wobei die Füllstoffpartikel und die flexiblen, organischen Binderpartikel durch die Cellulose miteinander verbunden sind, **dadurch gekennzeichnet, dass** die Binderpartikel elastomere Binderpartikel sind und die Füllstoffpartikel durch die elastomeren Binderpartikel mit dem Vliesstoff bzw. untereinander verbunden sind.

2. Separator nach Anspruch 1, **dadurch gekennzeichnet, dass** die Cellulose Cellulosederivate enthält, die als Celluloseether und/ oder Celluloseester ausgestaltet sind.

3. Separator nach Anspruch 1 oder 2, **dadurch gekennzeichnet, dass** die Beschichtung nichtionische Tenside enthält, die Oktyl- und/ oder Nonylphenolethoxylate und/ oder alkylierte Ethylenoxid/Polypropylenoxid-Copolymere aufweisen.

4. Separator nach einem der Ansprüche 1 bis 3, **dadurch gekennzeichnet, dass** die flexiblen, organischen Binderpartikeln einen Anteil von mindestens 2 Gewichts-% der Beschichtung ausmachen.

5. Separator nach einem der Ansprüche 1 bis 4, **dadurch gekennzeichnet, dass** die Binderpartikeln aus organischen Polymeren bestehen, die aus der Gruppe der, Polyvinylverbindungen, Kautschuke, halogenierte Polymere, und Copolymere aus den vorgenannten, Nitrilkautschuk (NBR), Styrolbutadienkautschuk (SBR), Latex, fluorierte Polymere, chlorierte Polymere, Siloxane, Silylverbindungen, Silane, ungesättigte Polymere sowie Copolymere und Gemischen davon ausgewählt sind.

6. Separator nach einem der Ansprüche 1 bis 5, **dadurch gekennzeichnet, dass** zumindest einige Füllstoffpartikeln aus organischen Polymeren gefertigt sind, die aus der Gruppe Polyacetale, Polycycloolefin-Copolymere, Polyester, Polyimide, Polyetherketone, Polycarboxylate, halogenierte Polymere, ungesättigte Polymere, Polypropylen, Polyethylen, Polyvinylpyrrolidon, Polyvinylidenfluorid, Polyester, fluorierte Polymere, chlorierte Polymere, Polytetrafluorethylen, Perfluor-Ethylen-Propylen (FEP), Polystyrol, Polyacrylat, Polymethacrylate, Polyetheramide, Polyetherimide, Polyetherketone sowie Copolymere und Gemische der zuvor genannten Polymere ausgewählt sind.

7. Separator nach einem der Ansprüche 1 bis 6, **dadurch gekennzeichnet, dass** zumindest einige Füllstoffpartikeln als anorganische Partikeln ausgestaltet sind.

8. Separator nach Anspruch 7, **dadurch gekennzeichnet, dass** die anorganischen Partikeln ausgewählt sind aus der Gruppe bestehend aus Metalloxiden, Metallhydroxiden und Silikaten, insbesondere Aluminiumoxiden, Siliciumoxiden, Zeolithen, Titanaten und/oder Perowskiten.

9. Separator nach einem der Ansprüche 1 bis 8, **dadurch gekennzeichnet, dass** die Fasern des Vliesstoffs aus organischen Polymeren gefertigt sind, die aus der Gruppe Polybutylterephtalat, Polyethylenterephthalat, Polyacrylnitril, Polyvinylidenfluorid, Polyetheretherketon, Polyethylennaphtalat, Polysulfon, Polyimid, Polyester, Polypropylen, Polyethylen, Polyoxymethylen, Polyamid, Polyvinylidenfluorid oder Polyvinylpyrrolidon ausgewählt sind.

10. Separator nach einem der Ansprüche 1 bis 9, **dadurch gekennzeichnet, dass** die Beschichtung Unebenheiten aufweist, die aus der Ebene maximal 1 µm herausragen und/ oder dass die Beschichtung Vertiefungen aufweist, die eine Tiefe von maximal 1 µm aufweisen.

11. Separator nach einem der Ansprüche 1 bis 10, **dadurch gekennzeichnet, dass** die flexiblen organischen Binderpartikeln einen Erweichungspunkt oder Glaspunkt von kleiner gleich 20° Celsius aufweisen.

## Claims

1. Separator having a main body made of nonwoven material, wherein the main body has been provided with a coating, wherein the coating comprises filler particles and cellulose, wherein the filler particles are distributed homogeneously over the area of the main body and all pores in the nonwoven material have been homogeneously filled with filler particles such that the separator shows predominantly average pore sizes that are smaller than the average diameters of the filler particles, wherein the coating comprises flexible organic binder particles, wherein the cellulose comprises cellulose derivatives having a chain length of at least 100 repeat units, and wherein the filler particles and the flexible organic binder particles are bonded to one another by the cellulose, **characterized in that** the binder particles are elastomeric binder particles and the filler particles are bonded to the nonwoven material and/or to one another by the elastomeric binder particles.

2. Separator according to Claim 1, **characterized in that** the cellulose comprises cellulose derivatives in the form of cellulose ethers and/or cellulose esters.

3. Separator according to Claim 1 or 2, **characterized in that** the coating comprises nonionic surfactants including octyl- and/or nonylphenol ethoxylates and/or alkylated ethylene oxide/propylene oxide copolymers.

4. Separator according to any of Claims 1 to 3, **characterized in that** the flexible organic binder particles account for a proportion of at least 2% by weight of the coating.

5. Separator according to any of Claims 1 to 4, **characterized in that** the binder particles consist of organic polymers selected from the group of the polyvinyl compounds, rubbers, halogenated polymers, and copolymers of the above, nitrile rubber (NBR), styrene-butadiene rubber (SBR), latex, fluorinated polymers, chlorinated polymers, siloxanes, silyl compounds, silanes, unsaturated polymers, and copolymers and mixtures thereof.

6. Separator according to any of Claims 1 to 5, **characterized in that** at least some filler particles have been manufactured from organic polymers selected from the group of polyacetals, polycycloolefin copolymers, polyesters, polyimides, polyether ketones, polycarboxylates, halogenated polymers, unsaturated polymers, polypropylene, polyethylene, polyvinylpyrrolidone, polyvinylidene fluoride, polyesters, fluorinated polymers, chlorinated polymers, polytetrafluoroethylene, perfluoroethylene-propylene (FEP), polystyrene, polyacrylate, polymethacrylate, polyether amides, polyether imides, polyether ketones, and copolymers and mixtures of the aforementioned polymers.

7. Separator according to any of Claims 1 to 6, **characterized in that** at least some filler particles are in the form of inorganic particles.

8. Separator according to Claim 7, **characterized in that** the inorganic particles are selected from the group consisting of metal oxides, metal hydroxides and silicates, especially aluminium oxides, silicon oxides, zeolites, titanates and perovskites.

9. Separator according to any of Claims 1 to 8, **characterized in that** the fibres of the nonwoven material have been manufactured from organic polymers selected from the group of polybutyl terephthalate, polyethylene terephthalate, polyacrylonitrile, polyvinylidene fluoride, polyether ether ketone, polyethylene naphthalate, polysulfone, polyimide, polyester, polypropylene, polyethylene, polyoxymethylene, polyamide, polyvinylidene fluoride and polyvinylpyrrolidone.

10. Separator according to any of Claims 1 to 9, **characterized in that** the coating has unevenness projecting from the plane by not more than 1 µm and/or in that the coating has depressions having a depth of not more than 1 µm.

11. Separator according to any of Claims 1 to 10, **characterized in that** the flexible organic binder particles have a softening point or glass transition point of not more than 20° Celsius.

## Revendications

1. Séparateur présentant un corps de base en non-tissé, le corps de base étant pourvu d'un revêtement, le revêtement contenant des particules de charge et de la cellulose, les particules de charge étant réparties dans le corps de base de manière homogène en surface et l'ensemble des pores du non-tissé étant remplis de façon homogène par les particules de charge de manière telle que le séparateur présente principalement des dimensions moyennes de pore qui sont inférieures au diamètre moyen des particules de charge, le revêtement contenant des particules de liant organiques, souples, la cellulose contenant des dérivés de cellulose qui présentent une longueur de chaîne d'au moins 100 motifs récurrents et les particules de charge et les particules de liant organiques, souples étant reliées les unes aux autres par la cellulose, **caractérisé en ce que** les particules de liant sont des particules de liant élastomères et les particules de charge sont reliées par les particules de liant élastomères au non-tissé et ou les unes avec les autres.

2. Séparateur selon la revendication 1, **caractérisé en ce que** la cellulose contient des dérivés de cellulose qui sont conçus en étant qu'éther de cellulose et/ou ester de cellulose.

3. Séparateur selon la revendication 1 ou 2, **caractérisé en ce que** le revêtement contient des tensioactifs non ioniques, qui présentent des éthoxylates d'octylphénol et/ou de nonylphénol et/ou des copolymères alkylés d'oxyde d'éthylène/oxyde de propylène.

4. Séparateur selon l'une quelconque des revendications 1 à 3, **caractérisé en ce que** les particules de liant souples, organiques représentent une proportion d'au moins 2% en poids du revêtement.

5. Séparateur selon l'une quelconque des revendications 1 à 4, **caractérisé en ce que** les particules de liant sont constituées par des polymères organiques qui sont choisis dans le groupe formé par les composés de polyvinyle, les caoutchoucs, les polymères halogénés et les copolymères des composés précédents, le caoutchouc nitrile (NBR), le caoutchouc de styrène-butadiène (SBR), le latex, les polymères fluorés, les polymères chlorés, les siloxanes, les composés silyle, les silanes, les polymères insaturés ainsi que les copolymères et les mélanges de ceux-ci.

6. Séparateur selon l'une quelconque des revendications 1 à 5, **caractérisé en ce qu'**au moins certaines particules de charge sont produites à partir de polymères organiques qui sont choisis dans le groupe formé les polyacétals, les copolymères de polycyclooléfines, les polyesters, les polyimides, les polyéthercétones, les polycarboxylates, les polymères halogénés, les polymères insaturés, le polypropylène, le polyéthylène, la polyvinylpyrrolidone, le poly(fluorure de vinylidène), les polyesters, les polymères fluorés, les polymères chlorés, le polytétrafluoroéthylène, le perfluoro-éthylène-propylène (FEP), le polystyrène, le polyacrylate, les polyméthacrylates, les polyétheramides, les polyétherimides, les polyéthercétones ainsi que les copolymères et les mélanges des polymères susmentionnés.

7. Séparateur selon l'une quelconque des revendications 1 à 6, **caractérisé en ce qu'**au moins certaines particules de charge sont conçues en tant que particules inorganiques.

8. Séparateur selon la revendication 7, **caractérisé en ce que** les particules inorganiques sont choisies dans le groupe constitué par les oxydes de métal, les hydroxydes de métal et les silicates, en particulier les oxydes d'aluminium, les oxydes de silicium, les zéolithes, les titanates et/ou les pérovskites.

9. Séparateur selon l'une quelconque des revendications 1 à 8, **caractérisé en ce que** les fibres du non-tissé sont produites à partir de polymères organiques, qui sont choisis dans le groupe formé par le poly(téréphtalate de butyle), le poly(téréphtalate d'éthylène), le polyacrylonitrile, le poly(fluorure de vinylidène), la polyétheréthercétone, le poly(naphtalate d'éthylène), la polysulfone, le polyimide, le polyester, le polypropylène, le polyéthylène, le polyoxyméthylène, le polyamide, le poly(fluorure de vinylidène) ou la polyvinylpyrrolidone.

10. Séparateur selon l'une quelconque des revendications 1 à 9, **caractérisé en ce que** le revêtement présente des irrégularités, qui dépassent d'au maximum 1 µm du plan et/ou **en ce que** le revêtement présente des creux qui présentent une profondeur d'au maximum 1 µm.

11. Séparateur selon l'une quelconque des revendications 1 à 10, **caractérisé en ce que** les particules de liant organiques, souples présentent un point de ramollissement ou un point de transition vitreuse inférieur à 20°C.
